(19) Europäisches Patentamt
European Patent Office
Office européen des brevets

(11) **EP 3 693 708 B1**

(12) **EUROPÄISCHE PATENTSCHRIFT**

(45) Veröffentlichungstag und Bekanntmachung des Hinweises auf die Patenterteilung:
**17.07.2024 Patentblatt 2024/29**

(21) Anmeldenummer: **19156224.8**

(22) Anmeldetag: **08.02.2019**

(51) Internationale Patentklassifikation (IPC):
**G01D 5/347** *(2006.01)*

(52) Gemeinsame Patentklassifikation (CPC):
**G01D 5/34792; G01D 5/34746**

(54) **ZYLINDER MIT EINER KOLBENSTANGE UND EINEM OPTISCHEN POSITIONSMESSER**

CYLINDER WITH A PISTON ROD AND AN OPTICAL POSITION SENSOR

CYLINDRE DOTÉ D'UNE TIGE DE PISTON ET D'UN DISPOSITIF OPTIQUE DE MESURE DE LA POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.08.2020 Patentblatt 2020/33**

(73) Patentinhaber: **Jungheinrich Aktiengesellschaft**
**22047 Hamburg (DE)**

(72) Erfinder: **Hämmerl, Robert**
**85368 Moosburg (DE)**

(74) Vertreter: **Hauck Patentanwaltspartnerschaft mbB**
**Postfach 11 31 53**
**20431 Hamburg (DE)**

(56) Entgegenhaltungen:

| | |
|---|---|
| EP-A2- 1 635 073 | EP-B1- 1 426 737 |
| WO-A1-2016/174517 | DE-T1- 4 397 478 |
| DE-T2- 69 307 135 | |

## Beschreibung

Die vorliegende Erfindung betrifft einen Zylinder mit einer Kolbenstange und einem optischen Positionsmesser, der auf eine an der Kolbenstange angeordnete Markierung gerichtet ist.

Für eine Positionsmessung an der Kolbenstange eines Zylinders ist bekannt, inkrementell die Position der Kolbenstange, ausgehend von einer Referenzmarke, zu erfassen. Eine solche Markierung wird eingesetzt, indem zuerst die Referenzmarke erfasst wird, wodurch eine Startposition bekannt und ausgehend von der bekannten Startposition über die weitere Markierung inkrementell die aktuelle Position der Kolbenstange bestimmt wird. Eine solche Markierung besitzt den Nachteil, dass je nach Position der Kolbenstange beim Start der Messung mitunter eine lange Referenzfahrt erforderlich ist, um die Referenzmarke als Ausgangspunkt für die inkrementelle Messung zu erfassen.

Ebenso bekannt sind absolut messende Systeme, bei denen die Markierung auf der Kolbenstange einen Code trägt, mit dem eine Absolutposition der Markierung auf der Kolbenstange angegeben ist. Als nachteilig an der Codierung der Absolutposition hat sich herausgestellt, dass die Codierung der Position und der Aufbau des dafür notwendigen Sensors aufwendig ist.

Aus WO 95/01510 ist ein hydraulischer, pneumatischer oder ein ähnlicher Zylinder bekannt geworden, der eine mit einer Markierung versehene Kolbenstange aufweist, auf die ein optischer Sensor gerichtet ist. Die auf der Kolbenstange vorgesehene Markierung erlaubt sowohl eine inkrementelle als auch eine absolute Codierung der Position. Zur Bestimmung der absoluten Position sind drei Leseköpfe vorgesehen, von denen zwei in Richtung der Markierung hintereinander angeordnet sind und so eine Auswertung der Geschwindigkeit gestatten. Der dritte Sensor misst unabhängig von den ersten beiden Sensoren und erlaubt das Lesen einer absoluten Position auf der Kolbenstange.

Aus EP 1 426 737 B1 ist eine Vorrichtung zur Positionsbestimmung eines beweglichen mechanischen Elements bekannt, ebenso wie ein Verfahren zur Herstellung einer solchen Codierung. Bei der bekannten Codierung sind Codeelemente vorgesehen, die einen unterscheidbaren Teil einer optisch lesbaren Markierung bilden. Die aus mehreren Codeelementen bestehende Codierung bildet einen numerischen Wert in binären Ziffern (Bits). Der so codierte numerische Wert zeigt die Position auf der Kolbenstange an. Ein Codeelement besitzt auf der Oberfläche der Kolbenstange einen Abschnitt mit einer vorgegebenen Breite T. Zur Codierung einzelner Bits sind zwei Abschnitte vorgesehen, wobei ein Abstand der Breite von 1 T oder 2 T jeweils die binäre Ziffer 0 oder 1 anzeigt. Ferner sind Endmarkierungen in der Länge 4 T vorgesehen, die ein Paar von angrenzenden Flächen abtrennen. Zur Codierung ist es vorgesehen, pseudozufällige Binärfolgen zu verwenden. Über die zufällige Codierung wird mit Hilfe eines abgespeicherten Feldes die Position bestimmt.

Aus DE 693 07 135 T2 ist eine Positionsskala und ein optischer Lesesensor zum Lesen derselben bekannt geworden. Verwendet wird ein Code mit Skalenstrichen mit zwei unterschiedlichen Breiten, wobei eine binäre Codierung der Position vorliegt. Ein individueller Code besteht aus einer vorbestimmten Anzahl von aufeinanderfolgenden Strichen auf der Skala.

Aus DE 693 08 034 T2 ist ein Lageerfassungssystem bekannt, bei dem eine Gruppe von Markierungen einen eindeutigen Code bestimmen, der zur Bestimmung der Position verwendet wird. Die Markierung besteht aus dünneren und dickeren Strichen, wobei die Gruppe von Markierungen aus 12 Markierungen auf der Kolbenstange besteht.

Aus DE 3634730 A1 ist ein mit Markierungen versehener Arbeitszylinder bekannt, dessen Position inkrementell gemessen wird, wobei zur besseren Kenntlichmachung eine Markierung mit größerer Länge vorgesehen ist.

Aus EP 1 635 073 A2 ist ein Berechnungsmodul bekannt, mit dem eine erste nummerische Sequenz in Übereinstimmung mit einer Abfolge von Markierungen und eine zweite Abfolge von Markierungen auf einer Kolbenstange detektiert und im Hinblick auf ihren Abstand ausgewertet wird.

Aus DE 43 97 478 T1 ist eine Positionsskala aus Strichen bekannt, die eine erste und eine zweite Kante aufweisen, wobei entweder die erste oder die zweite Kante in regelmäßigen Abständen angeordnet sind. Die Striche besitzen mindestens zwei verschiedene Breiten und aufeinanderfolgende Striche auf der Skala bilden einen individuellen Code.

Aus WO 2016/174517 A1 ist eine Codierung bekannt, bei der einzelne unterscheidbare Merkmale in unterschiedlicher Länge einen Code erzeugen.

Der Erfindung liegt die Aufgabe zugrunde, für einen Zylinder mit einer Kolbenstange eine Markierung bereitzustellen, die zuverlässige und leicht zu lesende Positionsangaben enthält.

Erfindungsgemäß wird die Aufgabe durch einen Zylinder mit den Merkmalen aus Anspruch 1 gelöst. Vorteilhafte Ausgestaltungen bilden die Gegenstände der Unteransprüche.

Der erfindungsgemäße Zylinder besitzt eine Kolbenstange und einen optischen Positionsmesser, der auf eine an der Kolbenstange angeordnete Markierung gerichtet ist. Wird die Kolbenstange des Zylinders verfahren, so bewegt sich die Markierung relativ zu dem Positionsmesser. Die Markierung besitzt mindestens zwei für den optischen Positionssensor unterscheidbare Codeelemente. Die Codeelemente bilden die Grundbausteine für eine zuverlässige optische Positionserkennung. Aus den Codeelementen werden zwei oder mehr verschiedene Codezeichen gebildet. Mit b als natürlicher Zahl größer gleich 2 ($b >= 2$), können b verschiedene Codezeichen von 0 bis b-1 gebildet werden, die jeweils genau eine b-adische Darstellung einer Zahl bilden. Ferner kann ein Trennzeichen aus mehreren Codeelementen gebildet sein. Es können zwei oder mehr verschiedene Codezeichen zur Bildung eines Codewortes vorgesehen sein. Aus hardwaretechnischen Gründen besitzen die b-verschiedenen Codezeichen und das Trennzeichen bevorzugt jeweils eine andere physikalische Länge auf der Kolbenstange. In der logischen Ebene bilden mehrere Codezeichen (0, 1, 2, ..., n-1) ein Codewort aus einer vorbestimmten Anzahl von n-Codezeichen. Auch das Trennzeichen kann einfach oder zusammengesetzt aus einem oder mehreren Zeichen im Sinne von Untertrennzeichen bestehen. Die Erfindung ist nun in besonderem Maße dadurch gekennzeichnet, dass die über die Kolbenstange sich erstreckende Markierung eine Vielzahl von Codewörterpaaren aus benachbarten Codeworten aufweist, die paarweise eine vorbestimmte physikalische Gesamtlänge auf der Kolbenstange besitzen. Der besondere Vorteil von Codewörterpaaren mit gleicher physikalischer Länge auf der Kolbenstange liegt darin, dass beim Auslesen der Position von der Markierung, durch die Codewörterpaare selbst eine Überprüfung der gelesenen Signale erfolgen kann. Tritt ein Fehler beim Lesen auf, so ist bekannt, nach welcher Strecke der Lesevorgang zu einem Codewörterpaar hätte abgeschlossen sein müssen und wann ein neuer Lesevorgang eingeleitet werden kann.

Das Konzept der b-adischen Darstellung wird bevorzugt für b = 2 und b = 3 verwendet, so dass mit den Codeelementen zwei bzw. drei Codezeichen und ein Trennzeichen gebildet werden. Im Falle von b=2 kann eine binäre Codierung verwendet werden, so dass ein Codewort aus einer Abfolge von "0" und "1" besteht. Im Falle einer ternären Codierung besteht ein Codewort aus einer Abfolge von "0", "1" und "2". Bevorzugt besitzen beispielsweise die Codewörter (010) und (101) eine unterschiedliche physikalische Länge auf der Kolbenstange, da beispielsweise die "0" auf der Kolbenstange durch eine erste Abfolge von Codeelementen (dhdhh) codiert ist, während die "1" als eine andere Abfolge der Codeelemente (dhdhdhh) mit einer anderen physikalischen Länge auf der Kolbenstange codiert ist. In der vorstehenden Erläuterung steht "d" beispielsweise für dunkel und "h" für hell. Das Zeichen der Codeelemente "dd" oder "hh" steht dann beispielsweise für zwei Codeelemente hintereinander, also einer Codierung mit doppelter physikalischer Länge auf der Kolbenstange. Die Codewörter zwar eine gleiche binäre oder logische Länge mit drei Binärzeichen, aber eine vollkommen unterschiedliche physikalische Länge auf der Kolbenstange. Bei der ternären Codierung wird dann zusätzlich noch die "2", beispielsweise durch (dhdhdhdhh) codiert, so dass hier auch die physikalische Länge auf der Kolbenstange variiert wird.

Die Codewörter in einem Codewörterpaar grenzen auf der Kolbenstange aneinander an.

In einer bevorzugten Weiterbildung besitzen die beiden Codewörter in einem Codewörterpaar insgesamt zwei Trennzeichen. Es hat sich als praktisch herausgestellt, wenn jedes Codewort von einem Trennzeichen gefolgt oder eingeleitet wird. Bei dieser Zuordnung ergibt es sich dann selbstverständlich, dass zwei Trennzeichen in einem Codewörterpaar enthalten sind.

In einer vorbestimmten Ausgestaltung besitzt jedes Codewort eine vorbestimmte Anzahl von Codezeichen, die das Codewort bilden. Die unterschiedliche Länge der Codewörter auf der Kolbenstange kommt trotz der festgelegten Anzahl von Codezeichen in dem Codewort zustande, da die Codeelemente oder die daraus gebildeten Codezeichen eine unterschiedliche Länge auf der Kolbenstange besitzen. Selbst wenn die Codeelemente die gleiche Länge auf der Kolbenstange besitzen, so ist damit für die Codezeichen die physikalische Länge auf der Kolbenstange nicht gleich.

In einer besonders bevorzugten Ausgestaltung besitzen zwei mit Trennzeichen voneinander getrennte Codewörter mit jeweils n-Codezeichen einen maximalen Abstand (im Sinne eines Hamming-Abstands) zueinander. Abstand bedeutet hierbei die Anzahl und Wertigkeit an Codezeichen, die in einem Codewort gewandelt werden müssen, um von einem ersten Codewort zu einem zweiten Codewort zu gelangen. Ein solcher großer Abstand zwischen zwei Wörtern eines Codewörterpaares stellt sicher, dass, wenn bekannt ist, dass ein Codewörterpaar vorliegt, Lesefehler schnell entdeckt und möglicherweise auch korrigiert werden können. Der Abstand von n für zwei Codewörter mit jeweils n Codezeichen bedeutet, dass bei einer binären Darstellung das Summencodewort aus n aufeinanderfolgenden "1" besteht. Bei einer ternären Codierung ist der Abstand entsprechend 2n und auf Grund des Abstandes enthält das Summencodewort n aufeinanderfolgende "2".

Bevorzugt sind bei dem erfindungsgemäßen Zylinder die Codeelemente (h, d) aus hellen und dunklen Streifen auf der Kolbenstange gebildet, dies bedeutet, dass einerseits der Übergang von einem hellen Streifen h zu einem dunklen Streifen d und von einem dunklen Streifen d zu einem hellen Streifen h erfasst werden kann. Zum anderen können beispielsweise aus einer Abtastrate oder einer Vorschubgeschwindigkeit auch zwei oder mehr helle oder dunkle Streifen hintereinander erkannt werden. Die Codeelemente aus hellen und dunklen Streifen sind im Vergleich zu Codeelementen, die in ihrer Länge als dünnere und breitere Codeelemente auf der Kolbenstange aufgebracht sind, weniger störungsanfällig und zuverlässiger auszuwerten. Bevorzugt besitzen die Codeelemente die gleiche physikalische Länge auf der Kolbenstange.

Ein bevorzugtes Ausführungsbeispiel wird nachfolgend näher beschrieben. Es zeigen:

Fig. 1     einen hydraulischen Zylinder mit einer Kolbenstange, auf deren Markierung ein optischer Positionssensor gerichtet ist,

Fig. 2     einen Ausschnitt aus der Kolbenstange,

Fig. 3 einen beispielhaft vergrößerten Code,

Fig. 4 eine beispielhafte Codierung mit drei Codeelementen und einem Trennzeichen nach jedem Codewörterpaar und

Fig. 5 eine beispielhafte ternäre Codierung.

Die Erfindung wird nachfolgend anhand eines Beispiels näher erläutert. Der besondere Aspekt der Erfindung liegt in der Verwendung von Codewörterpaaren.

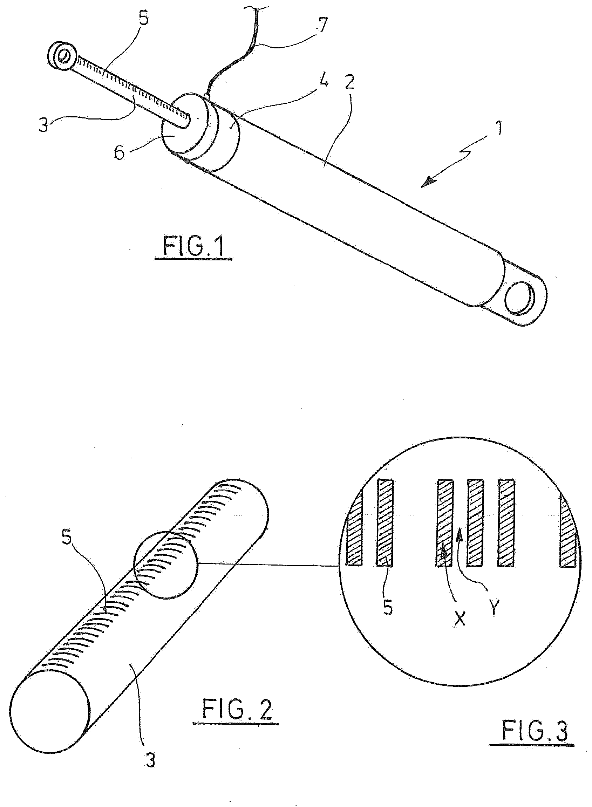

Fig. 1 zeigt in einer schematischen Ansicht einen Zylinder 1, wobei es sich beispielsweise um einen Hydraulik- oder Pneumatikzylinder handeln kann. Der Zylinder 1 besitzt eine Zylinderhülse 2 und eine Kolbenstange 3. Die Kolbenstange 3 tritt durch eine auf einem Zylinderkopf 4 angeordnete Abdeckung 6 hindurch und ist im Durchtritt gegenüber dem Zylinderinneren abgedichtet. Eine Messeinrichtung (nicht näher dargestellt) ist in die Abdeckung 6 integriert und erfasst optisch eine Markierung 5 auf der Kolbenstange 3. Die Messeinrichtung könnte auch in dem Zylinderkopf 4 integriert sein. Über ein Kabel 7 werden die erfassten Werte der Messeinrichtung, beispielsweise in Form von einer Signalsequenz an eine Auswertung weitergeleitet.

Fig. 2 zeigt die Kolbenstange 3 mit ihrer Markierung 5 im Ausschnitt, wobei Fig. 3 einen vergrößerten Blick auf die Markierung 5 erlaubt. Die vergrößerte Darstellung der Fig. 3 zeigt eine Reihe von Codeelementen, die aus einzelnen, auf die Kolbenstange aufgebrachten Linien oder Strichen bestehen. Jeder der aufgebrachten Striche verfügt über einen anderen Reflexionsgrad für einfallendes Licht. Beispielsweise kann vorgesehen sein, dass in den dunkel dargestellten Streifen der Markierung kein Licht reflektiert wird, während in den dazwischen liegenden blanken Bereichen das Licht reflektiert wird. Dies kann auch anders herum der Fall sein. Wichtig für die Auswertung der Markierung 5 ist, dass der optische Sensor in Position X über dem dunklen Streifen d ein anderes Signal liest als in Position Y über dem hellen Streifen h. Die von der Messeinrichtung erzeugte Signalsequenz besteht also aus einer Abfolge von d- und h-Signalen. Indem beispielsweise eine Vorschubgeschwindigkeit der Kolbenstange oder eine Abtastrate berücksichtigt wird, ist es auch möglich zwei oder mehr d- und h-Signale in Folge zu erfassen. Dies bedeutet, dass ein doppelt langer heller Streifen als ein hh-Signal, während ein doppelt langer dunkler Streifen als ein dd-Signal erkannt wird.

Die erfindungsgemäß vorgesehene Codierung besitzt eine logische Struktur, die das Auslesen der Signale erleichtert. Auf der logisch unteren Ebene befinden sich Codeelemente, die aus den in Fig. 3 dargestellten Strichen auf der Kolbenstange dargestellt sind. Je nach gewählter Codierung können mehrere Codeelemente zusammengefasst ein Codezeichen darstellen. Hier kann es sich beispielsweise um eine binäre "0" oder eine binäre "1" handeln. Ferner kann aus mehreren Codeelementen ein Trennzeichen definiert werden, das die Codezeichen eines Codewortes von den Codezeichen eines anderen Codewortes trennt. Ein Paar von Codewörtern kann zu einem Codewörterpaar zusammengefasst werden, wenn die addierte Länge der beiden Codewörter einen konstant vorbestimmten Wert auf der Kolbenstange ergibt.

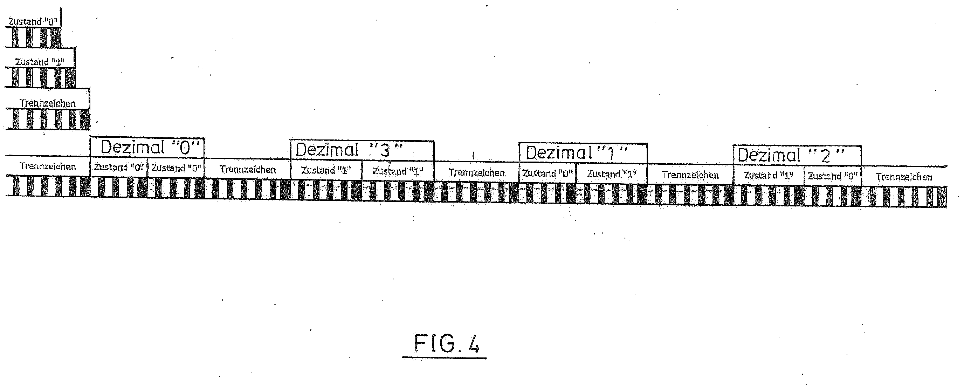

Fig. 4 zeigt ein besonderes Ausführungsbeispiel für eine binäre Codierung, die mit zwei Codezeichen "0" und "1" und einem Trennzeichen "T" arbeitet. Wie dargestellt, besteht das Codezeichen "0" aus der Folge "h-h-d-d-h-h-d-d-h-h-d-d-h-d-d-d". Diese Codeelemente "h" und "d" besitzen die gleiche physikalische Länge auf der Kolbenstange. Alternativ zu der Verwendung von doppelten Codeelementen können auch Codeelemente unterschiedlicher Länge vorgesehen sein, so dass nicht zwei Codeelemente d und h vorgesehen sind, sondern vier Codeelemente mit d, h, dd, hh. Das Codezeichen "1" unterscheidet sich von dem Codezeichen "0" dadurch, dass noch einmal ein schwarz- und weiß-Übergang eingeführt ist. Das Trennzeichen ist durch einen weiteren schwarz-weiß-Übergang dargestellt.

In der in Fig. 4 dargestellten Codierung liegt nun eine 2-Bit-Codierung vor. Hier wird codiert

T00T11T01T10T.

Die Codewörter "00" und "11" sind hierbei durch ein Trennzeichen "T" voneinander getrennt. Die Codewörter "00" und "11" bilden ein Codewörterpaar mit einer vorgegebenen Gesamtlänge. Ebenso ergibt das Codewort "01" und "10" ein Codewörterpaar mit der gleichen physikalischen Gesamtlänge auf der Kolbenstange.

Zum besseren Verständnis der Erfindung sei zunächst eine Markierung 5 betrachtet, die keine Codewörterpaare kennt. Nimmt man beispielsweise eine Codierung an, bei der ein Codewort aus drei Bit Länge besteht, so kann folgende Markierung auf der Kolbenstange aufgebracht sein:
000T001 T010T011 T100T101 T110T111,
wobei das Trennzeichen zwischen zwei Codewörtern hier durch "T" dargestellt ist. Liest bei dieser Markierung der optische Sensor beispielsweise die Markierung 100T, so war es bekannt, dass der Sensor sich gerade zwischen der fünften und sechsten Markierung befindet, so dass eine Auswertung die Position der Kolbenstange ergibt. In diesem Beispiel haben sämtliche Codewörter die gleiche logische Länge, da sie stets 3 Bit besitzen. Jedoch ist es bei dem Aufbau aus Codeelementen so, dass das Codezeichen "0" beispielsweise als Strich-Lücke-Strich-Strich also d-h-d-d codiert ist, während das Codezeichen "1" eine Darstellung in Codeelementen eine andere physikalische Länge auf der Kolbenstange besitzt. Geht man von einer solchen Situation aus, so besitzen die Codezeichen "0" und "1" nicht die gleiche physikalische Länge, ebenso wenig wie das Codewort "100" und "011" die gleiche physikalische Länge besitzen.

Erfindungsgemäß ist daher vorgesehen, in der Markierung 5 mehrere Codewörterpaare vorzusehen, die die gleiche Länge besitzen. Ein Beispiel ist: 000T111T001T110T010T101T011T100.

Betrachtet man die vorstehende Markierung 5, so stellt man fest, dass die aufeinanderfolgenden Codewörter "000T" und "111T" in einem Paar zusammengefasst, die gleiche Länge besitzen wie die folgenden Paare:

$$P_1 = ((000T), (111T))$$

$$P_2 = ((001T), (110T))$$

$$P_3 = ((010T), (101T))$$

$$P_4 = ((011T), (100T)).$$

Die vier Codewörterpaare $P_1$ - $P_4$ besitzen jeweils die gleiche physikalische Länge auf der Kolbenstange, da sie stets die gleiche Anzahl von Codezeichen "0" und "1" aufweisen. Das Summencodewort ergibt immer (111), denn (010) + (101) = (111). Ein weiterer Vorzug der vorstehenden Codewörterpaare liegt darin, dass innerhalb eines Codewörterpaares die Hamming-Distanz zwischen zwei Codewörtern "3" beträgt, wobei das Trennzeichen "T" außeracht gelassen wird. Eine weitere Eigenschaft besteht darin, dass das letzte Codewort eines Codewörterpaares und das erste Codewort eines nachfolgenden Codewörterpaares einen Abstand von "2" besitzen. Je nach der erforderlichen Länge und Genauigkeit der Aufteilung der Kolbenstange kann eine unterschiedlich große Anzahl von Codezeichen für die Darstellung eines Codewortes gewählt werden.

Da die Markierung 5 bei der Verwendung der Codewörterpaare nicht sequenziell erfolgt, ist zur Auswertung der Position der Kolbenstange eine Tabelle vorgesehen, die einem einzelnen Codewort eine Position zuordnet.

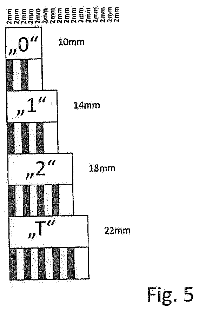

Figur 5 betrifft eine ternäre Codierung mit den Codezeichen "0", "1" und "2" und einem Trennzeichen "T". Das Codezeichen "0" ist hier aus als d-h-d-h-h auf die Kolbenstange aufgetragen. Bei einer Länge von 2 mm für einen hellen und einen dunklen Streifen ergibt sich eine physikalische Gesamtlänge von 10 mm auf der Kolbenstange. Das Codezeichen "1" ist aus den Codeelementen d-h-d-h-d-h-h codiert und besitzt dementsprechend eine Länge von 14 mm auf der Kolbenstange. Das Codezeichen "2" ist aus den Codeelementen d-h-d-h-d-h-d-h-h mit einer physikalischen Länge von 18 mm zusammengesetzt. Das Codezeichen "T" enthält eine zusätzliche Folge d-h gegenüber der "2" und bildet damit die Codezeichenfolge: d-h-d-h-d-h-d-h-d-h. Die physikalische Länge auf der Kolbenstange beträgt somit dann 22 mm.

Die Bildung von Codewörtern und Codewörterpaaren erfolgt bei einer ternären also einer 3-adischen Darstellung analog zu der binären Darstellung. Beispielsweise haben vier Codewörterpaare:

$$P_1= ((0122T),(2100T))$$

$$P_2= ((0202T),(2020T))$$

$$P_3= ((1222T),(1000T))$$

$$P_4= ((0120T),(2102T)).$$

Bei der ternären Codierung ist das Codewort, das nur aus "1" auszuschließen, da es hierzu kein korrespondierendes Codewort gibt, um ein Codewörterpaar zu bilden.

Ein besonderer Vorteil der Codierung mit gleichlangen Codewörterpaaren liegt darin, dass bei der Herstellung einer oder mehrerer Kolbenstangen eine einzige durchgehende Markierung auf eine noch nicht geteilte oder gekürzte Kolbenstange aufgebracht werden kann und die dann ohne Rücksicht auf die Lage der Markierung geteilt und/oder gekürzt werden kann, um in einer konkreten Einbauumgebung verwendet zu werden. Die durchgehende Markierung enthält hierbei keine Wiederholungen der Codewörterpaare und ist insofern eindeutig. Insbesondere bei einer ternären Codierung kommt dieser Vorteil zum Tragen.

Bezugszeichenliste

1    Zylinder
2    Zylinderhülse
3    Kolbenstange
4    Zylinderkopf
5    Markierung
6    Abdeckung
7    Kabel

**Patentansprüche**

1.  Zylinder (1) mit einer Kolbenstange (3) und einem optischen Positionsmesser, der auf eine an der Kolbenstange (3) angeordnete Markierung (5) gerichtet ist, die eine Anzahl von Codewörtern aufweist, wobei jedes Codewort aus zwei oder mehr Codezeichen und einem Trennzeichen besteht und jedes der zwei oder mehr Code- und Trennzeichen aus einer Abfolge von Codeelementen (h, d) bestehen, die aus einer Menge von mindestens zwei von dem Positionssensor lesbaren und auf die Kolbenstange aufgebrachten Codeelementen (h, d) ausgewählt sind, wobei

- b-verschiedene Codezeichen (0, 1, 2,..., b-1) in einer b-adischen Darstellung aus den Codeelementen (h, d) gebildet sind,
- zwei oder mehr der Codezeichen (0, 1, 2,..., b-1) ein Codewort in der b-adischen Darstellung bilden und
- jedes Codewort n-Codezeichen besitzt,

**dadurch gekennzeichnet, dass** die Markierung (5) eine Vielzahl von Codewörterpaaren aus in Messrichtung benachbarten Codewörtern aufweist, die paarweise eine vorbestimmte physikalische Gesamtlänge auf der Kolbenstange aufweisen, wobei die physikalische Gesamtlänge für alle Codewortpaare gleich ist.

2. Zylinder nach Anspruch 1, **dadurch gekennzeichnet, dass** b=2 gesetzt ist und die Codewörter in einer binären Codierung vorliegen.

3. Zylinder nach Anspruch 2, **dadurch gekennzeichnet, dass** die Summe von zwei Codewörtern aus einem Codewörterpaar ein Summencodewort ergibt, das nur Einsen enthält.

4. Zylinder nach Anspruch 1, **dadurch gekennzeichnet, dass** b=3 gesetzt ist und die Codewörter in einer ternären Codierung vorliegen.

5. Zylinder nach Anspruch 4, **dadurch gekennzeichnet, dass** die Summe von zwei Codewörtern aus einem Codewörterpaar ein Summencodewort ergibt, das nur Zweien enthält.

6. Zylinder (1) nach einem der Ansprüche 1 bis 5, **dadurch gekennzeichnet, dass** die beiden Codewörter in einem Codewörterpaar zusammen zwei Trennzeichen aufweisen.

7. Zylinder (1) nach einem der Ansprüche 1 bis 6, **dadurch gekennzeichnet, dass** zwei durch ein Trennzeichen voneinander getrennte Codewörter, die jeweils n Codezeichen aufweisen, sich um einen maximalen Abstand voneinander unterscheiden.

8. Zylinder (1) nach Anspruch 7, **dadurch gekennzeichnet, dass** die Codewörter eines Codewörterpaares sich in allen ihren Codezeichen voneinander unterscheiden.

9. Zylinder nach einem der Ansprüche 1 bis 8, **dadurch gekennzeichnet, dass** die Codeelemente (h, d) aus hellen und dunklen Streifen auf der Kolbenstange gebildet sind.

10. Zylinder nach einem der Ansprüche 1 bis 9, **dadurch gekennzeichnet, dass** die Codeelemente (h, d) aus hellen und dunklen Streifen gleicher physikalische Länge auf der Kolbenstange gebildet sind.

**Claims**

1. A cylinder (1) comprising a piston rod (3) and an optical position sensor directed towards a marker (5) disposed on the piston rod (3) and comprising a number of code words, each code word consisting of two or more code characters and a separator character, each of the two or more code and separator characters consisting of a sequence of code elements (h, d) selected from a set of at least two code elements (h, d) readable by the position sensor and applied to the piston rod, wherein

- b-different code characters (0, 1, 2,..., b-1) are formed from the code elements (h, d) in a b-adic representation,
- two or more of the code characters (0, 1, 2,..., b-1) form a code word in the b-adic representation and
- each code word has n code characters,

**characterized in that** the marking (5) comprises a plurality of code word pairs consisting of code words which are adjacent in the measuring direction and which have a predetermined total physical length on the piston rod in pairs, the total physical length being the same for all code word pairs.

2. Cylinder according to claim 1, **characterized in that** b=2 is set and the code words are present in a binary coding.

3. Cylinder according to claim 2, **characterized in that** the sum of two code words from a code word pair results in a sum code word which contains only ones.

4. Cylinder according to claim 1, **characterized in that** b=3 is set and the code words are present in a ternary coding.

5. Cylinder according to claim 4, **characterized in that** the sum of two code words from a code word pair results in a sum code word containing only twos.

6. Cylinder (1) according to one of claims 1 to 5, **characterized in that** the two code words in a code word pair together have two separators.

7. Cylinder (1) according to one of claims 1 to 6, **characterized in that** two code words, which are separated from each other by a separator and each have n code characters, differ from each other by a maximum distance.

**8.** Cylinder (1) according to claim 7, **characterized in that** the code words of a code word pair differ from one another in all their code characters.

**9.** Cylinder according to one of claims 1 to 8, **characterized in that** the code elements (h, d) are formed from light and dark stripes on the piston rod.

**10.** Cylinder according to one of claims 1 to 9, **characterized in that** the code elements (h, d) are formed from light and dark stripes of the same physical length on the piston rod.

**Revendications**

**1.** Cylindre (1) doté d'une tige de piston (3) et d'un dispositif optique de mesure de la position, lequel est orienté vers un marquage (5) disposé sur la tige de piston (3), lequel présente un certain nombre de mots de code, dans lequel chaque mot de code est constitué de deux ou plusieurs signes de code et d'un signe de séparation et chacun des deux ou plusieurs signes de code et de séparation est constitué d'une succession d'éléments de code (h, d), lesquels sont sélectionnés parmi une quantité d'au moins deux éléments de code (h, d) lisibles par le capteur de position et appliqués sur la tige de piston, dans lequel

- des signes de code différents de b (0, 1, 2, ..., b-1) sont formés dans une représentation b-adique à partir des éléments de code (h, d),
- deux ou plusieurs des signes de code (0, 1, 2, ..., b-1) forment un mot de code dans la représentation b-adique et
- chaque mot de code possède n signes de code,

**caractérisé en ce que** le marquage (5) présente une pluralité de paires de mots de code constituées de mots de code adjacents dans la direction de mesure, lesquels présentent une longueur totale physique prédéfinie par paires sur la tige de piston, dans lequel la longueur totale physique est égale pour toutes les paires de mots de code.

**2.** Cylindre selon la revendication 1, **caractérisé en ce que** b=2 est fixé et les mots de code sont présentés dans un codage binaire.

**3.** Cylindre selon la revendication 2, **caractérisé en ce que** la somme de deux mots de code d'une paire de mots de code donne un mot de code de somme, lequel ne contient que des uns.

**4.** Cylindre selon la revendication 1, **caractérisé en ce que** b=3 est fixé et les mots de code sont présentés dans un codage ternaire.

**5.** Cylindre selon la revendication 4, **caractérisé en ce que** la somme de deux mots de code d'une paire de mots de code donne un mot de code de somme, lequel ne contient que des deux.

**6.** Cylindre (1) selon l'une des revendications 1 à 5, **caractérisé en ce que** les deux mots de code dans une paire de mots de code présentent conjointement deux signes de séparation.

**7.** Cylindre (1) selon l'une des revendications 1 à 6, **caractérisé en ce que** deux mots de code séparés l'un de l'autre par un signe de séparation, lesquels présentent respectivement n signes de code, se distinguent l'un de l'autre par une distance maximale.

**8.** Cylindre (1) selon la revendication 7, **caractérisé en ce que** les mots de code d'une paire de mots de code se distinguent l'un de l'autre dans tous leurs signes de code.

**9.** Cylindre selon l'une des revendications 1 à 8, **caractérisé en ce que** les éléments de code (h, d) sont formés par des rayures claires et foncées sur la tige de piston.

**10.** Cylindre selon l'une des revendications 1 à 9, **caractérisé en ce que** les éléments de code (h, d) sont formés par des rayures claires et foncées de même longueur physique sur la tige de piston.

FIG.1

FIG.2

FIG.3

Zustand "0"

Zustand "1"

Trennzeichen

Dezimal "0"  Dezimal "3"  Dezimal "1"  Dezimal "2"

Trennzeichen | Zustand "0" | Zustand "0" | Trennzeichen | Zustand "1" | Zustand "1" | Trennzeichen | Zustand "0" | Zustand "1" | Trennzeichen | Zustand "1" | Zustand "0" | Trennzeichen

FIG. 4

2mm 2mm 2mm 2mm 2mm 2mm 2mm 2mm 2mm 2mm 2mm 2mm 2mm 2mm

„0"  10mm

„1"  14mm

„2"  18mm

„T"  22mm

Fig. 5

**IN DER BESCHREIBUNG AUFGEFÜHRTE DOKUMENTE**

**In der Beschreibung aufgeführte Patentdokumente**

- WO 9501510 A
- EP 1426737 B1
- DE 69307135 T2
- DE 69308034 T2
- DE 3634730 A1
- EP 1635073 A2
- DE 4397478 T1
- WO 2016174517 A1